# EUROPEAN PATENT APPLICATION

(11) **EP 4 596 259 A1**
(43) Date of publication of application: **06.08.2025**
(21) Application number: 23871322.6
(22) Date of filing: 16.06.2023
(51) Int. Cl.: B60C 11/00, B60C 11/03, B60C 11/12

(54) **PNEUMATIC TIRE**

(30) Priority: 26.09.2022 JP 2022153038
(71) Applicant: BRIDGESTONE CORPORATION, Chuo-ku Tokyo 104-8340 (JP)
(72) Inventor: KAJI, Yoshio, Tokyo 104-8340 (JP); NOMURA, Hiroshi, Tokyo 104-8340 (JP); IKEDA, Shuhei, Tokyo 104-8340 (JP)
(74) Representative: Marks & Clerk LLP
(86) International application number: PCT/JP2023/022497
(87) International publication number: WO 2024/070077

(57) **Abstract**

A pneumatic tire in which a surface of a block has a plurality of sipes and a plurality of shallow grooves that extend in mutually opposite directions in the tire width direction, relative to one direction along the tire circumferential direction, depth of the shallow grooves is less than depth of the sipes, an inclination angle θ1 of the sipes relative to the tire circumferential direction is greater than 0° and less than 90°, an inclination angle θ2 of the shallow grooves relative to the tire circumferential direction is greater than 0° and less than 90°, and magnitude of a difference between the inclination angle θ1 and the inclination angle θ2 is 30° or less.

## Description

### TECHNICAL FIELD

The present disclosure relates to a pneumatic tire.

### BACKGROUND

Conventionally, a tire having a plurality of sipes and a plurality of shallow grooves having a depth that is shallower than that of the sipes has been proposed as a winter tire (for example, see Patent Literature (PTL) 1). According to such a tire, the shallow grooves can remove water film to secure on-ice and on-snow performance when new.

### CITATION LIST

### Patent Literature

PTL 1: JP 2004-034903 A

### SUMMARY

### (Technical Problem)

In the technology described above, there was room for improvement in on-ice gripping performance.

It would be helpful to provide a pneumatic tire that has improved on-ice gripping performance.

### (Solution to Problem)

Primary features of the present disclosure are as follows.
(1) A pneumatic tire wherein
   a plurality of blocks are defined on a contact surface of a tread portion by a plurality of circumferential main grooves extending in the tire circumferential direction and a plurality of width direction grooves extending in the tire width direction,
   a surface of each of the blocks has a plurality of sipes and a plurality of shallow grooves that extend in mutually opposite directions in the tire width direction, relative to one direction along the tire circumferential direction,
   depth of the shallow grooves is less than depth of the sipes,
   an inclination angle θ1 of the sipes relative to the tire circumferential direction is greater than 0° and less than 90°,
   an inclination angle θ2 of the shallow grooves relative to the tire circumferential direction is greater than 0° and less than 90°, and
   magnitude of a difference between the inclination angle θ1 and the inclination angle θ2 is 30° or less.

Here, "contact surface" refers to a surface that extends over the entire range around the tire circumferential direction of a contact patch that comes into contact with a road surface when the pneumatic tire is mounted on an applicable rim, inflated to a prescribed internal pressure, and subjected to a maximum load.

Further, "circumferential main grooves" and "width direction grooves" refer to grooves having a groove width (opening width) of 2 mm or more, and "sipes" refers to sipes having a sipe width that is wide enough to partially close when the tire is in contact with the ground, such as a sipe width of 0.3 mm to 0.6 mm, for example.

Further, "depth" of the sipes and the shallow grooves refers to the maximum depth when the pneumatic tire is mounted on an applicable rim, inflated to a prescribed internal pressure, and under no load.

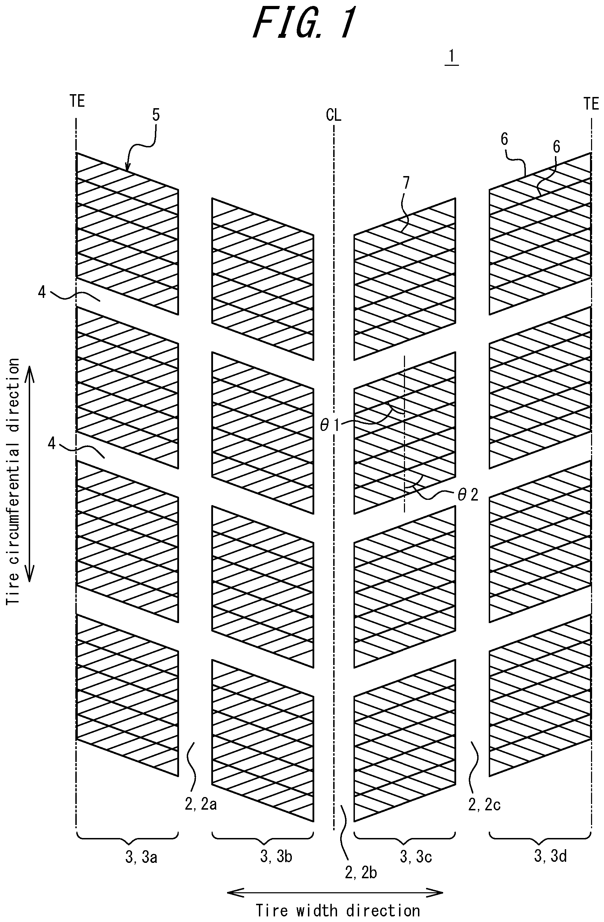

Further, "inclination angle" of the sipes or the shallow grooves means, when the sipes or the shallow grooves are not linear in planar view, an angle of inclination of a virtual line connecting the end points of the sipes or the shallow grooves relative to the tire circumferential direction. Further, measurement of the sipes and the shallow grooves is made in mutually opposite directions in the tire width direction relative to the tire circumferential direction (see FIG. 1).

Hereinafter, "applicable rim" refers to an approved rim of an applicable size that is currently or will be described in an industrial standard valid for the region where the tire is produced and used: in Japan the JATMA YEAR BOOK of the Japan Automobile Tyre Manufacturers Association (JATMA), in Europe the STANDARDS MANUAL of The European Tyre and Rim Technical Organisation (ERTRO), and in the U.S.A. the YEAR BOOK of The Tire and Rim Association, Inc. (TRA). An approved rim in the STANDARDS MANUAL of ETRTO is the Measuring Rim, and in the YEAR BOOK of TRA is the Design Rim. That is, the "rim" of a "wheel" above includes not only current sizes but also sizes that may be included in the industrial standard in the future. An example of a size to be described in the future is a size described in "FUTURE DEVELOPMENTS" in the 2013 publication of ETRTO. However, in a case of a size not described in the industrial standards above, a rim having a width that corresponds to tire bead width is referenced.

Further, "prescribed internal pressure" refers to an air pressure (maximum air pressure) corresponding to a maximum load capability of a single wheel of an applicable size and ply rating described in the industrial standard of JATMA or the like. In the case of a size that is not described in the industrial standards above, "prescribed internal pressure" refers to an air pressure (maximum air pressure) corresponding to a maximum load capability prescribed for each vehicle on which the tire is mounted.

Further, "maximum load" refers to a load corresponding to the maximum load capability mentioned above.

Hereinafter, "groove width" and "sipe width" refer to the opening width when the pneumatic tire is mounted on an applicable rim, inflated to a prescribed internal pressure, and under no load.

### (Advantageous Effect)

According to the present disclosure, a pneumatic tire that has improved on-ice gripping performance may be provided.

### BRIEF DESCRIPTION OF THE DRAWINGS

In the accompanying drawings:
FIG. 1 is a developed view schematically illustrating a tread pattern of a pneumatic tire according to an embodiment of the present disclosure;
FIG. 2A is a diagram schematically illustrating flow of water when θ1 = 60° and θ2 = 15°;
FIG. 2B is a diagram schematically illustrating flow of water when θ1 = θ2 = 60°;
FIG. 3 is a tire width direction partial cross-section diagram, illustrating one half portion in the tire width direction of a pneumatic tire according to an embodiment of the present disclosure; and
FIG. 4 is a diagram for explanation of tread patterns of examples.

### DETAILED DESCRIPTION

Hereinafter, embodiments of the present disclosure are illustratively described in detail, with reference to the drawings.

FIG. 1 is a developed view schematically illustrating a tread pattern of a pneumatic tire (hereinafter also referred to simply as "tire") according to an embodiment of the present disclosure. The internal structure of the tire is not particularly limited. In accordance with convention, the tire may include a pair of bead portions, a pair of sidewalls connected to the bead portions, and a tread portion connected to the sidewall portions. Further, the tire may include a carcass toroidally extending across the pair of bead portions, and a reinforcement layer, such as a belt, on the tire radial direction outside of the crown portion of the carcass.

As illustrated in FIG. 1, on a contact surface 1 of the tread portion, the tire has a plurality of circumferential main grooves 2 extending in the tire circumferential direction, and a plurality of land portions 3 are defined between the circumferential main grooves 2 or between a circumferential main groove 2 and a tread edge TE.

In the illustrated example, three of the circumferential main grooves 2 are formed, with a circumferential main groove 2a located in a half portion of the tire in one tire width direction bounded by the tire equatorial plane CL, a circumferential main groove 2b extending on the tire equatorial plane CL, and a circumferential main groove 2c located in a half portion of the tire in the other tire width direction bounded by the tire equatorial plane CL. On the other hand, the number of the circumferential main grooves 2 is not limited to three, and may be any number greater than one.

In the illustrated example, the circumferential main grooves 2 all extend straight along the tire circumferential direction, but may extend in a zigzag-shape, bent shape, or curved shape. Further, in the illustrated example, the circumferential main grooves 2 extend along the tire circumferential direction (without inclination), but may extend at an inclination angle of 5° or less relative to the tire circumferential direction. Groove width (opening width) of each of the circumferential main grooves 2 may be 2 mm to 12 mm, for example. Groove depth (maximum depth) of each of the circumferential main grooves 2 may be 5 mm to 12 mm, for example.

In the illustrated example, four of the land portions 3 are formed, with land portions 3a, 3b located in a half portion of the tire in one tire width direction bounded by the tire equatorial plane CL, and land portions 3c, 3d located in a half portion of the tire in the other tire width direction bounded by the tire equatorial plane CL. On the other hand, the number of the land portions 3 corresponds to the number of the circumferential main grooves 2, and may be any number that is three or more. Further, any of the land portions 3 may be located on the tire equatorial plane CL.

Each of the land portions 3 has a plurality of width direction grooves 4 extending in the tire width direction. In the illustrated example, in each of the land portions 3, a plurality of the width direction grooves 4 are arranged at approximately equal intervals in the tire circumferential direction, thereby dividing the land portion 3 into a plurality of (approximately identically shaped) blocks 5.

In the illustrated example, the width direction grooves 4 all extend straight, but may extend in a zigzag-shape, bent shape, or curved shape. Further, the width direction grooves 4 may extend in the tire width direction, and may extend at an inclination angle of 60° or less (or 45° or less, or 30° or less) relative to the tire width direction. Groove width (opening width) of each of the width direction grooves 4 may be 2 mm to 12 mm, for example. Groove depth (maximum depth) of each of the width direction grooves 4 may be 5 mm to 12 mm, for example. Further, in the illustrated example, the width direction grooves 4 dividing up the land portion 3a along with the width direction grooves 4 dividing up the land portion 3b are arranged on straight lines, and the width direction grooves 4 dividing up the land portion 3c along with the width direction grooves 4 dividing up the land portion 3d are arranged on straight lines. This configuration can further enhance drainage performance. On the other hand, the width direction grooves 4 dividing up the land portion 3a and the width direction grooves 4 dividing up the land portion 3b do not have to be arranged on straight lines (virtual extensions may be displaced from each other in the tire circumferential direction), and the width direction grooves 4 dividing up the land portion 3c and the width direction grooves 4 dividing up the land portion 3d do not have to be arranged on straight lines (virtual extensions may be displaced from each other in the tire circumferential direction). Further, in the illustrated example, the width direction grooves 4 located in one half portion in the tire width direction bounded by the tire equatorial plane CL and the width direction grooves 4 located in the other half portion in the tire width direction are inclined in mutually opposite directions in the tire circumferential direction relative to the tire width direction, but may be inclined in the same direction in the tire circumferential direction relative to the tire width direction.

In this way, a plurality of blocks 5 are defined by a plurality of the circumferential main grooves 2 extending in the tire circumferential direction and a plurality of the width direction grooves 4 extending in the tire width direction. In the illustrated example, each of the blocks 5 has an approximately parallelogram shape in this planar view, but the blocks 5 are not limited to this shape.

As illustrated in FIG. 1, the surface of each of the blocks 5 has a plurality of sipes 6 and a plurality of shallow grooves 7 that extend in mutually opposite directions in the tire width direction, relative to one direction along the tire circumferential direction. The sipes 6 and the shallow grooves 7 intersect each other.

In the illustrated example, the sipes 6 are arranged four to each of the blocks 5. The number of the sipes 6 may be any number greater than one, and is not limited to four. Further, in the illustrated example, the four of the sipes 6 are equally spaced in the tire circumferential direction so that the size of the block pieces defined by the sipes 6 is approximately the same. On the other hand, the sipes 6 do not necessarily have to be equally spaced in the tire circumferential direction. In the illustrated example, each of the sipes 6 is a flat plate-shaped sipe that extends in a straight line in planar view, but the sipes 6 may extend in a zigzag shape. The sipes 6 may be so-called three-dimensional sipes, in which inner walls of the sipes have an irregular shape along the sipe depth direction. In the present example, the sipes 6 open into the circumferential main grooves 2 at both ends, but either one or both ends may terminate in the blocks 5.

According to the present embodiment, an inclination angle θ1 of the sipes 6 relative to the tire circumferential direction is greater than 0° and less than 90°. The inclination angle θ1 is preferably 45° or more, more preferably 60° or more, and even more preferably 75° or more. In the present example, the sipes 6 have the same inclination angle relative to the tire circumferential direction as the width direction grooves 4, but may have a different inclination angle.

In the present example, sipe depth (maximum depth) of the sipes 6 may be 5 mm to 8 mm, for example.

In the illustrated example, the shallow grooves 7 are arranged 15 to each of the blocks 5. The number of the shallow grooves 7 may be any number greater than one, and is not limited to 15. Further, in the illustrated example, the 15 of the shallow grooves 7 are equally spaced in the tire circumferential direction so that the size of the block pieces defined by the shallow grooves 7 is approximately the same. Pitch spacing in the tire circumferential direction of the shallow grooves 7 may be 1.0 mm to 3.0 mm, for example. On the other hand, the shallow grooves 7 do not necessarily have to be equally spaced in the tire circumferential direction. In the illustrated example, the shallow grooves 7 extend in a straight line in planar view, but may extend in a zigzag shape. In the present example, the shallow grooves 7 open into the circumferential main grooves 2 at both ends, but either one or both ends may terminate in the blocks 5.

According to the present embodiment, an inclination angle θ2 of the shallow grooves 7 relative to the tire circumferential direction is greater than 0° and less than 90°. The inclination angle θ2 is preferably 45° or more, more preferably 60° or more, and even more preferably 75° or more.

Groove width (opening width) of the shallow grooves 7 is preferably 0.75 times to 1.0 times the sipe width (opening width) of the sipes 6. Although not particularly limited, the groove width (opening width) of the shallow grooves 7 may be 0.3 mm to 0.4 mm, for example. Groove depth (maximum depth) of the shallow grooves 7 is less than the depth (maximum depth) of the sipes 6. The groove depth (maximum depth) of the shallow grooves 7 may be 0.1 mm to 0.3 mm, for example.

Here, according to the present embodiment, magnitude of the difference between the inclination angle θ1 and the inclination angle θ2 is 30° or less (the absolute value of θ1 - θ2 is 30° or less). The magnitude of the difference between the inclination angle θ1 and the inclination angle θ2 is preferably 15° or less.

The following is an explanation of effects of the pneumatic tire according to the present embodiment.

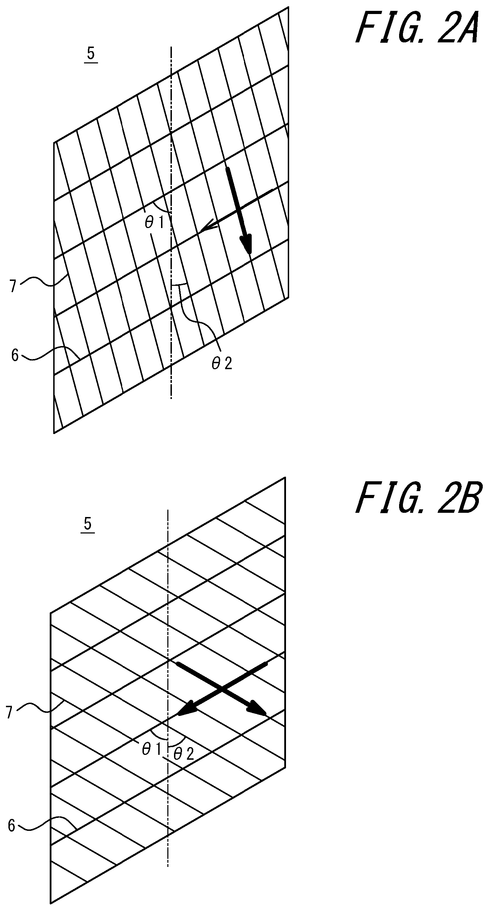

To solve the technical problem described above, the inventors studied the behavior of water on ice, focusing on the inclination angle of sipes and shallow grooves relative to the tire circumferential direction in tires having sipes and shallow grooves in blocks. FIG. 2A is a diagram schematically illustrating flow of water when θ1 = 60° and θ2 = 15°. FIG. 2B is a diagram schematically illustrating flow of water when θ1 = θ2 = 60°. As schematically illustrated in FIG. 2A and FIG. 2B, when the difference in the inclination angle between sipes and shallow grooves relative to the tire circumferential direction is large (FIG. 2A), it was found that more water flows to the smaller inclination angle relative to the tire circumferential direction (the shallow grooves in FIG. 2A), as schematically illustrated by the difference in arrow thickness, resulting in an uneven flow, making overflow of water more likely to occur. In contrast, when the difference in the inclination angle between sipes and shallow grooves relative to the tire circumferential direction is small (including the case where the angle is zero) (FIG. 2B), it was found that water flows evenly between the sipes and the shallow grooves, resulting in less likelihood of water overflow and improved drainage function.

The pneumatic tire according to the present embodiment has a plurality of the sipes 6 and a plurality of the shallow grooves 7 on the surface of the blocks 5, and therefore water film can be removed by both the sipes 6 and the shallow grooves 7 to improve the on-ice gripping performance, especially when new. The sipes 6 and the shallow grooves 7 are provided extending in mutually opposite directions in the tire width direction relative to one direction in the tire circumferential direction, and the difference between the inclination angle θ1 and the inclination angle θ2 is 30° or less, and therefore water flows evenly between the sipes 6 and the shallow grooves 7, as schematically explained with reference to FIG. 2B. As a result, water is less likely to overflow, the drainage function is improved, and the on-ice gripping performance can be further improved.

Here, when the inclination angle θ1 is 0°, the edge component in the tire width direction (the edge component relative to the tire circumferential direction) due to the sipes 6 becomes small. Further, when the inclination angle θ1 is 90°, the edge component in the tire circumferential direction (the edge component relative to the tire width direction) due to the sipes 6 becomes small. Similarly, when the inclination angle θ2 is 0°, the edge component in the tire width direction (the edge component relative to the tire circumferential direction) due to the shallow grooves 7 becomes small. Further, when the inclination angle θ2 is 90°, the edge component in the tire circumferential direction (the edge component relative to the tire width direction) due to the shallow grooves 7 becomes small.

The depth of the shallow grooves 7 is smaller than the depth of the sipes 6, and the shallow grooves 7 may be removed earlier, such as by break-in driving, for example.

As described above, the pneumatic tire according to the present embodiment can improve on-ice gripping performance.

Here, the inclination angle θ1 is preferably 45° or more, more preferably 60° or more, and even more preferably 75° or more. This is because by increasing the edge component of the sipes 6 in the tire width direction (the edge component relative to the tire circumferential direction) and improving the function of wiping water in the tire circumferential direction, on-ice gripping performance can be further improved.

Further, the inclination angle θ2 is preferably 45° or more, more preferably 60° or more, and even more preferably 75° or more. This is because by increasing the edge component of the shallow grooves 7 in the tire width direction (the edge component relative to the tire circumferential direction) and improving the function of wiping water in the tire circumferential direction, on-ice gripping performance can be further improved.

From the viewpoint of further improving on-ice gripping performance by allowing water to flow evenly between the sipes 6 and the shallow grooves 7, as described above, the magnitude of the difference between the inclination angle θ1 and the inclination angle θ2 is more preferably 15° or less, even more preferably 10° or less, even more preferably 5° or less, and most preferably 0°.

The case where the magnitude of the difference between the inclination angle θ1 and the inclination angle θ2 is more than 15° and 30° or less may also be preferred from the viewpoint of securing rigidity of the land portion and improving grounding property by preventing the block pieces divided up by the sipes 6 and the shallow grooves 7 from having portions with too small acute angles.

The groove width (opening width) of the shallow grooves 7 is preferably 0.75 times to 1.0 times the sipe width (opening width) of the sipes 6. This is because when the widths of the sipes 6 and the shallow grooves 7 are close to equivalent as in the range described above, then when the magnitude of the difference between the inclination angle θ1 and the inclination angle θ2 is in a range described above, water can flow more evenly and on-ice gripping performance can be further improved.

In the pneumatic tire according to the present disclosure, foamed rubber is preferably disposed in the tread rubber. Such a configuration can be realized, for example, by forming the cap rubber layer from foamed rubber, that is, rubber having a large number of closed air bubbles inside. In this way, by forming the cap rubber layer that comes into contact with a road surface from foamed rubber, on-ice and on-snow performance can be improved. Foamed rubber can be formed by adding a foaming agent to an ordinary rubber compound and heating and pressurizing according to ordinary tire production methods.

### [Example disposition of communication device]

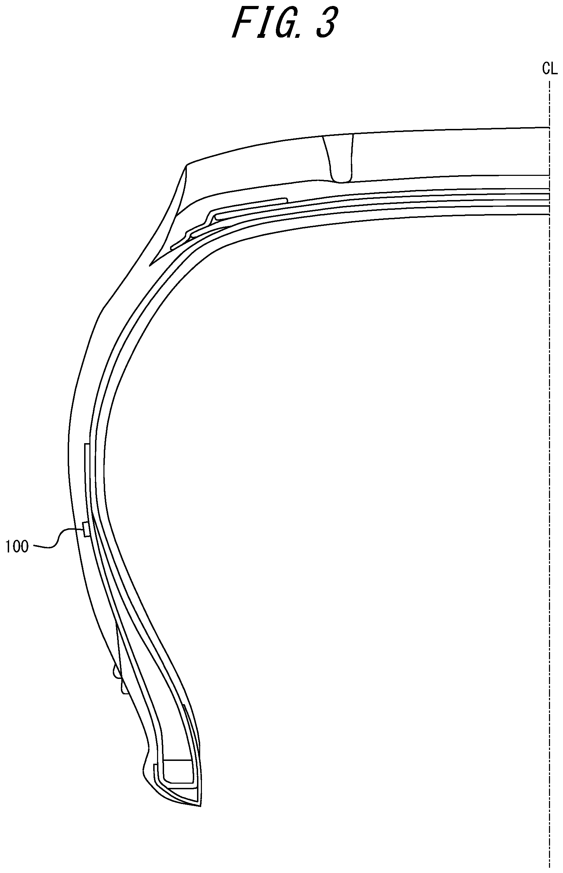

FIG. 3 is a tire width direction partial cross-section diagram, illustrating one half portion in the tire width direction of a pneumatic tire according to an embodiment of the present disclosure. The tire may include an RF tag as a communication device 100. The RF tag includes an IC chip and an antenna. The RF tag may be disposed, for example, sandwiched in a position between a plurality of members of the same or different types that constitute the tire. In this way, the RF tag can be easily installed during tire production, improving the productivity of the tire that includes the RF tag. According to the present example, the RF tag may be disposed sandwiched between, for example, bead filler and another member adjacent to the bead filler. The RF tag may be embedded within any of the members of the tire. In this way, load applied to the RF tag can be decreased compared to a case where the RF tag is disposed sandwiched in a position between a plurality of members of the tire. This can improve the durability of the RF tag. According to the present example, the RF tag may be embedded in a rubber member, such as tread rubber, side rubber, or the like. The RF tag is preferably not disposed at a boundary of members of different rigidity in the peripheral length direction, which is the direction along the outer surface of the tire in a tire width direction cross-section view. In this way, the RF tag is not disposed where strain is likely to be concentrated based on a rigidity step difference. This reduces the load applied to the RF tag. This can improve the durability of the RF tag. According to the present example, the RF tag is preferably not disposed, for example, at a boundary between the edge of the carcass and a member adjacent to the edge of the carcass (for example, side rubber or the like) in a tire width direction cross-section. The number of RF tags is not particularly limited. The tire may include only one RF tag, and may include two or more RF tags. Although an RF tag is illustrated here as an example of a communication device, the communication device may be something other than an RF tag.

The RF tag may be disposed, for example, in the tread portion of the tire. In this way, the RF tag is not damaged by a side cut of the tire. The RF tag may be disposed, for example, in a central portion of the tread in the tire width direction. The central portion of the tread is a location in the tread portion where deflection is less likely to be concentrated. In this way, load applied to the RF tag can be decreased. This can improve the durability of the RF tag. Further, a difference in communication performance with the RF tag from both sides of the tire in the tire width direction can be suppressed. In the present example, the RF tag may be disposed, for example, within 1/2 of the tread width in the tire width direction, centered on the tire equatorial plane. The RF tag may be disposed, for example, in a tread edge portion in the tire width direction. When the position of a reader that communicates with the RF tag is predetermined, the RF tag may be disposed, for example, on one side of the tread edge portion near such a reader. In the present example, the RF tag may be disposed, for example, within 1/4 of the tread width in the tire width direction, with the tread edge as the outer edge.

The RF tag may be disposed, for example, on the tire cavity side from the carcass, which includes one or more carcass plies, extending between the bead portions. In this way, the RF tag is less likely to be damaged by an impact applied from outside the tire or by damage such as a side cut or nail puncture. As an example, the RF tag may be disposed in close contact with a surface on the tire cavity side of the carcass. As another example, where another member is present that is closer to the tire cavity side than the carcass, the RF tag may be disposed between, for example, the carcass and the other member that is closer to the tire cavity side than the carcass. An example of the other member that is closer to the tire cavity side than the carcass is an inner liner that forms a tire inner surface. As another example, the RF tag may be attached to a tire inner surface facing the tire cavity. By configuring the RF tag to be attached to the tire inner surface, the RF tag is easily attachable to the tire and RF tag inspection and replacement is easily carried out. That is, the ease of installation and maintenance of the RF tag can be improved. Further, the RF tag is attached to the tire inner surface, which helps prevent the RF tag from becoming the core of a tire failure, compared to a configuration in which the RF tag is embedded inside the tire. Further, when the carcass includes a plurality of carcass plies and there is a position where the plurality of carcass plies are overlapped, the RF tag may be disposed between the overlapping carcass plies.

The RF tag may be disposed, for example, in the tread portion of the tire, outside in the tire radial direction from the belt that includes one or more belt plies. As an example, the RF tag may be disposed outside in the tire radial direction relative to the belt and in close contact with the belt. As another example, when a reinforcing belt layer is included, the RF tag may be disposed outside in the tire radial direction with respect to the reinforcing belt layer and in close contact with the reinforcing belt layer. As another example, the RF tag may be embedded in the tread rubber, outside in the tire radial direction from the belt. When the RF tag is disposed outside in the tire radial direction from the belt at the tread portion of the tire, communication with the RF tag from outside the tire in the tire radial direction is less likely to be inhibited by the belt. This improves communication performance with the RF tag from outside the tire in the tire radial direction. The RF tag may be disposed, for example, in the tread portion of the tire, inside in the tire radial direction from the belt. In this way, the outer side of the RF tag in the tire radial direction is covered by the belt, making the RF tag more resistant to damage from an impact from the tread surface, nail penetration, and the like. As an example, the RF tag may be disposed in the tread portion of the tire body, between the belt and the carcass disposed inside in the tire radial direction from the belt. Further, when the belt includes a plurality of the belt plies, the RF tag may be disposed between any two of the belt plies in the tread portion of the tire. In this way, the outer side of the RF tag in the tire radial direction is covered by one or more of the belt plies, making the RF tag more resistant to damage from an impact from the tread surface, nail penetration, and the like.

The RF tag may be disposed, for example, at the sidewall portion or the bead portion of the tire. The RF tag may be disposed, for example, at one side of the sidewall portion or one side of the bead portion closer to a reader that can communicate with the RF tag. This can improve communication performance between the RF tag and a reader. As an example, the RF tag may be disposed between the carcass and the side rubber, or between the tread rubber and the side rubber. The RF tag may be disposed, for example, in the tire radial direction, between a position of tire maximum width and a position of the tread surface. In this way, communication with the RF tag from outside the tire in the tire radial direction can be improved compared to a configuration in which the RF tag is disposed further inward in the tire radial direction than the position of the tire maximum width. The RF tag may be disposed, for example, inward in the tire radial direction from the position of the tire maximum width. In this way, the RF tag is disposed in the vicinity of the bead portion that has high rigidity. This reduces the load applied to the RF tag. This can improve the durability of the RF tag. As an example, the RF tag may be disposed adjacent to the bead core in the tire radial direction or the tire width direction. Strain is less concentrated near the bead core. This reduces the load applied to the RF tag. This can improve the durability of the RF tag. In particular, the RF tag is preferably disposed inward in the tire radial direction from the position of the tire maximum width and outward in the tire radial direction from the bead core of the bead portion. In this way, the durability of the RF tag can be improved and communication between the RF tag and a reader is not likely to be impeded by the bead core, increasing communication performance of the RF tag. When the side rubber includes a plurality of rubber members of the same or different types adjacent to each other in the tire radial direction, the RF tag may be disposed sandwiched between the plurality of rubber members of the side rubber.

The RF tag may be disposed sandwiched between the bead filler and a member adjacent to the bead filler. In this way, the RF tag can be disposed in a position where strain is less likely to be concentrated due to the position of the bead filler. This reduces the load applied to the RF tag. This can improve the durability of the RF tag. The RF tag may be disposed sandwiched between, for example, the bead filler and the carcass. The portion of the carcass that sandwiches the RF tag together with the bead filler may be disposed outside in the tire width direction or inside in the tire width direction, relative to the bead filler. When the portion of the carcass that sandwiches the RF tag together with the bead filler is outside in the tire width direction relative to the bead filler, the load on the RF tag due to impact or damage from outside the tire in the tire width direction can be further decreased. This can further improve the durability of the RF tag. Further, the bead filler may include a portion disposed adjacent to the side rubber. In such a case, the RF tag may be disposed sandwiched between the bead filler and the side rubber. Further, the bead filler may include a portion disposed adjacent to a rubber chafer. In such a case, the RF tag may be disposed sandwiched between the bead filler and the rubber chafer.

The RF tag may be disposed sandwiched between, for example, the rubber chafer and the side rubber. In this way, the RF tag can be disposed in a position where strain is less likely to be concentrated due to the position of the rubber chafer. This reduces the load applied to the RF tag. This can improve the durability of the RF tag. The RF tag may be disposed sandwiched between, for example, the rubber chafer and the carcass. In this way, load on the RF tag due to impact or damage applied from the rim can be decreased. Accordingly, the durability of the RF tag can be improved.

The RF tag may be disposed sandwiched between a wire chafer and another member adjacent to the wire chafer inside or outside in the tire width direction. In this way, the position of the RF tag is less likely to change during tire deformation. This reduces the load applied to the RF tag during tire deformation. This can improve the durability of the RF tag. The other member adjacent to the wire chafer inside or outside in the tire width direction may be, for example, a rubber member such as the rubber chafer. The other member adjacent to the wire chafer inside or outside in the tire width direction may be, for example, the carcass.

The belt may further include a belt reinforcement layer on the radial outside of the belt. For example, the belt reinforcement layer may be a cord made of polyethylene terephthalate spirally winding continuously in the tire circumferential direction. The cord may be adhesive treated with a tension of 6.9 × 10 - 2 N/tex or more, and the elastic modulus at 29.4 N load measured at 160 °C may be 2.5 mN/dtex·% or more. Further, the belt reinforcement layer may be arranged to cover the entire belt or only the ends of the belt. Further, the density of winding per unit width of the belt reinforcement layer may differ at different positions in the width direction. In this way, road noise and flat spots can be reduced without reducing high-speed durability.

### EXAMPLES

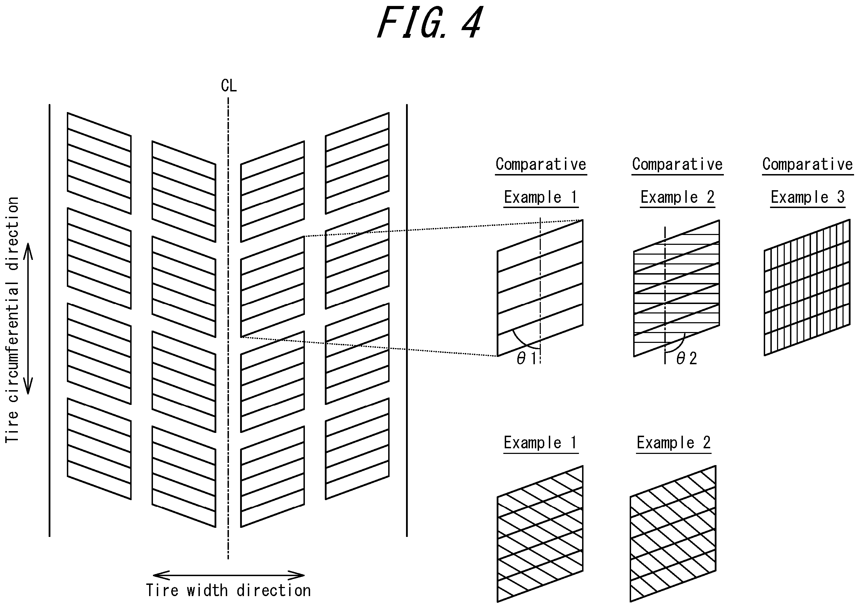

Examples of the present disclosure are described below, but the present disclosure is not limited in any way to the following examples. FIG. 4 is a developed view schematically illustrating tread patterns of the pneumatic tire assumed in the present examples. A plurality of blocks are defined on the contact surface of the tread portion by a plurality of circumferential main grooves extending in the tire circumferential direction and a plurality of width direction grooves extending in the tire width direction, and a plurality of sipes and a plurality of shallow grooves are provided to the surfaces of the blocks, extending in mutually opposite direction in the tire width direction relative to one direction in the tire circumferential direction, with the depth of the shallow grooves being less than the depth of the sipes. The internal structure of the pneumatic tire is not different from that of a typical pneumatic tire. In order to verify the effects of the present disclosure, the inventors focused on one block on the contact surface of the tread portion of the pneumatic tire, and produced rubber samples in which the inclination angle θ2 of the shallow grooves in the block relative to the tire circumferential direction was variously changed, and evaluated the on-ice coefficient of friction.

Five rubber block samples were prepared. The inclination angle θ1 of the sipes relative to the tire circumferential direction was 60° for all samples. Comparative Example 1 had no shallow groove, Comparative Example 2 had an inclination angle θ2 = 90° (θ1 - θ2 = -30°), Example 1 had an inclination angle θ2 = 60° (θ1 - θ2 = 0°), Example 2 had an inclination angle θ2 = 45° (θ1 - θ2 = 15°), and Comparative Example 3 had an inclination angle θ2 = 0° (θ1 - θ2 = 60°). The block size was 26 mm in circumferential length, 26 mm in width, and 8.5 mm in height, with a configuration of four sipes in the block. The shallow grooves were 0.4 mm wide, 0.25 mm deep, and had a 2.0 mm circumferential pitch.

The testing to evaluate the coefficient of friction on ice was conducted by measuring the coefficient of friction when a rubber block sample was pressed against an ice contact surface sliding at 10 km/h at an average ground contact pressure of 250 kPa in a laboratory apparatus cabinet at a temperature of -2 °C. The test results are listed in Table 1 below, where the evaluation result of Comparative Example 1 is set at 100, and a larger index indicates better performance.

**[Table 1]**

| | Comparative Example 1 | Comparative Example 2 | Example 1 | Example 2 | Comparative Example 3 |
|---|---|---|---|---|---|
| Inclination angle θ1 | 60° | 60° | 60° | 60° | 60° |
| Inclination angle θ2 | No shallow groove | 90° | 60° | 45° | 0° |
| θ1 - θ2 | No shallow groove | -30° | 0° | 15° | 60° |
| On-ice coefficient of friction (INDEX) | 100 | 131 | 148 | 139 | 109 |

Table 1 indicates that the on-ice coefficient of friction was greater in Examples 1 and 2 than in Comparative Examples 1 to 3. This means that the tires of Examples 1 and 2 have better on-ice gripping performance than the tires of Comparative Examples 1 to 3.

### REFERENCE SIGNS LIST

1: contact surface, 2: circumferential main groove, 3: land portion, 4: width direction groove,
5: block; 6: sipe; 7: shallow groove; 100: communication device,
CL: tire equatorial plane, TE: tread edge

## Claims

1. A pneumatic tire wherein
a plurality of blocks are defined on a contact surface of a tread portion by a plurality of circumferential main grooves extending in the tire circumferential direction and a plurality of width direction groove extending in the tire width direction,
a surface of each of the blocks has a plurality of sipes and a plurality of shallow grooves that extend in mutually opposite directions in the tire width direction, relative to one direction along the tire circumferential direction,
depth of the shallow grooves is less than depth of the sipes,
an inclination angle θ1 of the sipes relative to the tire circumferential direction is greater than 0° and less than 90°,
an inclination angle θ2 of the shallow grooves relative to the tire circumferential direction is greater than 0° and less than 90°, and
magnitude of a difference between the inclination angle θ1 and the inclination angle θ2 is 30° or less.

2. The pneumatic tire according to claim 1, wherein the inclination angle θ1 is 45° or more.

3. The pneumatic tire according to claim 1 or 2, wherein
the inclination angle θ2 is 45° or more, and
the magnitude of the difference between the inclination angle θ1 and the inclination angle θ2 is 15° or less.

4. The pneumatic tire according to any one of claims 1 to 3, wherein groove width of the shallow grooves is 0.75 times to 1.0 times sipe width of the sipes.
